# EUROPEAN PATENT APPLICATION

(11) **EP 3 396 423 A1**
(43) Date of publication of application: **31.10.2018**
(21) Application number: 17305474.3
(22) Date of filing: 27.04.2017
(51) Int. Cl.: G02B 5/20, G02B 1/111, G02B 5/22, G02B 1/14

(54) **A NIR-ABSORBING HARD COAT FORMULATION AND ITS METHOD OF PREPARATION**

(71) Applicant: Essilor International, 94220 Charenton-le-Pont (FR)
(72) Inventor: QI, Yangiong, 339346 Singapore (SG); LIM, Ee Woon, 39346 Singapore (SG)
(74) Representative: Cabinet Plasseraud

(57) **Abstract**

The invention concerns an optical article comprising a transparent substrate having at least one surface coated with a near infra-red absorbing layer obtained by depositing a sol-gel composition on said surface and then curing said sol-gel composition,
said sol-gel composition being prepared by hydrolyzing and condensing a sol-gel precursor,
said sol-gel composition comprising metal oxide nanoparticles dispersed therein, wherein the amount of metal oxide nanoparticles dispersed in said sol-gel composition is such that the ratio R = (dry content of metal oxide nanoparticles) / (dry content of sol-gel precursor) is higher than or equal to 0.2.

The invention also concerns a method for preparing said sol-gel composition and said optical article.

## Description

### TECHNICAL SCOPE OF THE INVENTION

The invention is in the field of optical articles, in particular ophthalmic lens, more particularly sun lenses.

The invention concerns in particular a hard coat for optical articles that can be used as a near-infrared (NIR) absorbing layer while having good anti-abrasion properties.

### PRIOR ART

Intense and extended exposure of the eye to NIR radiation is known to be harmful to the retina. In addition, it has been reported that NIR radiation could be one of the potential causes for dry eyes and cataracts. As such, there is a need for optical articles that contain NIR absorbing filters.

NIR absorbing filters can be incorporated into optical articles by various means.

For instance, an interferential stack of layers can be designed to have both antireflection properties and high reflection in the NIR range. Such a stack when placed on the convex side of a lens can reflect away a certain portion of NIR radiations from the eyes. However, since most of organic substrates are transparent to NIR radiations, there is a significant amount of back reflection for NIR radiations coming from the back side of the lens. Therefore, using a NIR reflective layer is not satisfactory.

Another way is to include NIR absorbing dyes in the lens. However, dye molecules capable of absorbing NIR are usually too bulky to be incorporated by the tinting method. The in-mass incorporation is possible but requires changing the original formulation of the substrate to make it compatible with the NIR absorbing dyes/oxides with no guarantee that the optical and mechanical performances of the final lens remains the same. Therefore, this solution is technically difficult to implement and restrictive since it does work with all substrates.

Another way is to coat the lens with a NIR absorbing hard coat. However, such coatings must not only be able to absorb the NIR radiations but must also satisfy other requirements, in particular mechanical requirements, such as good abrasion resistance and good adhesion, while preserving outstanding properties in terms of transparency and absence of any optical defect.

The inventors have found a simple method to address this problem.

The invention uses a sol-gel formulation to prepare a NIR absorbing hard coat for an optical article.

The sol-gel formulation of the invention comprises dispersed metal oxide nanoparticles as an NIR absorbing material. The composition of the sol-gel formulation is very simple and easy to prepare.

The resulting NIR absorbing hard coat has many advantages:
- Very good spectral characteristics (absorption in the visible range and in the NIR range),
- Very good cosmetic appearance: limited or no distortion effects or visual haze,
- Very good mechanical performances, such as abrasion resistance and adhesion.

The optical article of the invention is particularly useful for sun lenses.

### BRIEF DESCRIPTION OF THE INVENTION

According to a first aspect of the invention, there is provided an optical article comprising a transparent substrate having at least one surface coated with a near infra-red absorbing layer obtained by depositing a sol-gel composition on said surface and then curing said sol-gel composition,
said sol-gel composition being prepared by hydrolyzing and condensing a sol-gel precursor,
said sol-gel composition comprising metal oxide nanoparticles dispersed therein, wherein the amount of metal oxide nanoparticles dispersed in said sol-gel composition is such that the ratio R = (dry content of metal oxide nanoparticles) / (dry content of sol-gel precursor) is higher than or equal to 0.2.

According to a second aspect of the invention, there is provided a method for preparing the sol-gel composition as defined above, said method comprising the steps of:
- A1) hydrolyzing the sol-gel precursor thereby forming a hydrolyzed sol-gel precursor,
- B1) dispersing the metal oxide nanoparticles within the hydrolyzed sol-gel precursor,
- C1) condensing the hydrolyzed sol-gel precursor.

According to a third aspect of the invention, there is provided a method for preparing an optical article as defined above, said method comprising the steps of:
A2) preparing the sol-gel composition according to the method as defined above,
B2) depositing the sol-gel composition onto at least one surface of said transparent substrate,
C2) curing the sol-gel composition.

### FIGURES

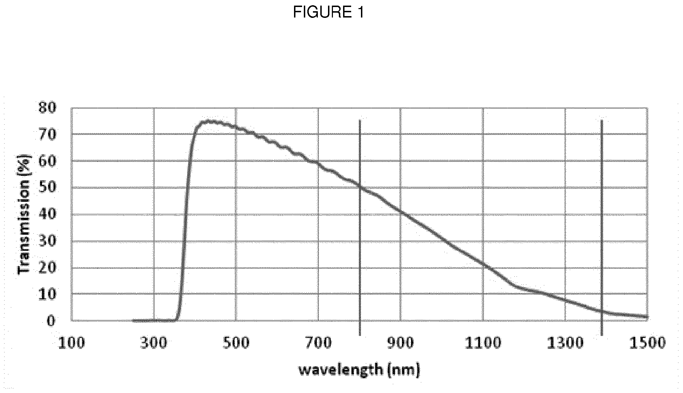

Figure 1 shows the transmission absorption spectrum of a coated substrate according to the invention, i.e. the variation of the transmission factor as a function of the wavelength.

### DETAILED DESCRIPTION OF THE INVENTION

As used herein, the term optical article includes optical lenses such as ophthalmic lenses and semi-finished lens.

An ophthalmic lens is meant to be a lens which is adapted to a spectacle frame to protect the eye and/or correct the sight. Ophthalmic lenses may be corrective and non-corrective lenses and also visors, shields, masks, goggles and other vision devices intended to be worn in front of the eyes.

In one embodiment, the optical article of the present invention is a sun lens.

As used herein, a sun lens is any colored lens or any optical lens with filter category from class 0 to 4, as defined in ISO 8980-3, especially a lens of class 3 or 4, or gradient lenses.

As used herein, a substrate is understood to mean an uncoated substrate, generally with two main surfaces corresponding in the finished ophthalmic lens to the front and rear faces thereof. The bulk of a transparent substrate is made of an optically transparent material, generally chosen from transparent materials of ophthalmic grade used in the ophthalmic industry, and formed to the shape of an optical device. The optically transparent material may be a mineral or organic glass. Examples of organic glasses are those made of thermoplastic or thermosetting resin. If the transparent material is an organic glass made of thermoplastic, the thermoplastic may be selected from the group consisting of polyamides, polyimides, polysulfones, polycarbonates (PC), polyethylene terephthalate, poly(methyl(meth)acrylate), cellulose triacetate, and copolymers thereof. If the transparent material is an organic glass made of thermosetting resin, the thermosetting resin may be selected from the group consisting of cycloolefin copolymers, homopolymers and copolymers of allyl carbonates of linear or branched aliphatic or aromatic polyols, homopolymers and copolymers of (meth)acrylic acid and esters thereof, homopolymers and copolymers of thio(meth)acrylic acid and esters thereof, homopolymers and copolymers of allyl esters, homopolymers and copolymers of urethane and thiourethane, homopolymers and copolymers of epoxy, homopolymers and copolymers of sulphide, homopolymers and copolymers of disulphide, homopolymers and copolymers of episulfide, and combinations thereof.

Particularly recommended substrates include those substrates obtained through (co)polymerization of the diethyleneglycol bis-allyl-carbonate, marketed, for example, under the trade name CR-39® by the PPG Industries company (ORMA® lenses, ESSILOR), or through polymerization of the thio(meth)acrylate monomers, such as those described in the application of the French patent FR 2 734 827. The substrates may be obtained through polymerization of the above monomer combinations, or may further comprise mixtures of such polymers and (co)polymers.

As used herein, a layer that is said to be coated on a surface of a substrate is defined as a coating, which (i) is positioned above the substrate, (ii) is not necessarily in contact with the substrate, that is to say one or more intermediate layers may be arranged between the substrate and the layer in question, and (iii) does not necessarily completely cover the substrate.

A layer (or coating) may be deposited or formed through various methods, including wet processing, gaseous processing, and film transfer. The functional coatings classically used in optics may be, without limitation, an impact-resistant and/or adhesion primer, an abrasion-resistant and/or scratch-resistant coating, an anti-reflection coating, an antistatic coating, an anti-soiling coating, an anti-reflective coating, an anti-smudge coating, an anti-dust coating, an anti-fog coating, a water repellent coating, an anti-scratch coating, an interferential filter, a tinted coating, a mirror coating, a photochromic coating, and a combination of any of preceding compatible coatings, especially an impact-resistant primer coating coated with an abrasion and/or scratch-resistant coating.

A first object of the invention is an optical article comprising a transparent substrate having at least one surface coated with a near infra-red absorbing layer obtained by depositing a sol-gel composition on said surface and then curing said sol-gel composition,
said sol-gel composition being prepared by hydrolyzing and condensing a sol-gel precursor,
said sol-gel composition comprising metal oxide nanoparticles dispersed therein, wherein the amount of metal oxide nanoparticles dispersed in said sol-gel composition is such that the ratio R = (dry content of metal oxide nanoparticles) / (dry content of sol-gel precursor) is higher than or equal to 0.2.

According to the invention, the near infra-red absorbing layer is obtained by depositing a sol-gel composition on at least one surface of a transparent substrate and then curing said sol-gel composition.

As used herein, a near infra-red absorbing layer is defined as a layer which absorbs in the near-infrared (NIR) region (780-1400 nm).

A sol-gel composition is here to be understood as a composition which can be obtained by a sol-gel process, i.e. by hydrolyzing and condensing a sol-gel precursor, typically a medium comprising at least one mineral alkoxide precursor (in most cases an alkoxide of formula M(OR)n wherein M denotes silicon or a metal such as Al or Ti; n denotes the valence of the element M; and the n groups -OR are identical or different organic groups, for example alkoxy groups). As it hydrolyzes, the precursor of the alkoxide type used in a sol-gel process is converted into hydroxylated species (typically of formula M(OH)n wherein M and n have the meanings given hereinbefore) which condense together to form mineral oxide particles by a process which is comparable to a polymerisation of the mineral precursor. Typically, those hydrolysis and condensation reactions first yield a sol (suspension of oxide particles) which gradually becomes concentrated, the particles that are forming occupying an ever larger volume fraction, whereby a gel is obtained; hence the generic expression "sol-gel" given to compositions and processes of this type. The gel thus obtained is transparent and has a vitreous aspect.

According to the invention, a near infra-red absorbing layer is obtained by depositing a sol-gel composition on at least one surface of a transparent substrate and then by curing said sol-gel composition.

The deposition of the sol-gel composition on said surface can be performed either by preparing the gel under the above-mentioned conditions and then applying it to the surface, or by applying to the surface to be coated a composition comprising the mineral precursor in the partially hydrolyzed state only (for example in the sol state) and then allowing gelling of the medium to take place only in the deposit so made

According to the invention, the sol-gel composition comprises metal oxide nanoparticles having NIR absorbing properties dispersed therein.

The metal oxide nanoparticles can be for example particles chosen from tin dioxide, indium tin oxide, antimony pentoxide, silicon dioxide, antimony-doped tin oxide, indium-doped tin oxide, phosphorus-doped tin oxide, gallium-doped zinc oxide, titanium dioxide, aluminum oxide or zinc oxide.

In one embodiment, the metal oxide nanoparticles are chosen from tin dioxide, antimony pentoxide, silicon pentoxide, or a mixture thereof.

For not impairing the transparency of the NIR absorbing layer, the mineral nanoparticles are preferably homogeneously dispersed in the sol-gel composition, i.e. do not form aggregates having a size higher than 100 nm, as measured by transmission electronical microscopy.

R is the ratio of the dry content of metal oxide nanoparticles over the dry content of sol-gel precursor.

As used herein, the dry content of a compound in the sol-gel composition is the dry weight of said compound (i.e. all its solid constituents excluding water or any other solvent) in said composition.

Surprisingly, the inventors have found a NIR absorbing hard coat having an unexpected high abrasion resistance and at the same time good optical properties. As such, abrasion resistance as measured by the Bayer abrasion test (ASTM F735-11) of at least 2.5, in particular at least 3, more particularly of at least 4 can be attained.

According to the invention, R is higher than or equal to 0.2.

In one embodiment, the ratio R is higher than or equal to 0.5.

In one embodiment, the ratio R is higher than or equal to 1.0.

In one embodiment, the ratio R is higher than or equal to 1.5.

In one embodiment, the ratio R is higher than or equal to 2.3.

For instance, when R is higher than or equal to 0.7, the abrasion resistance of the NIR absorbing layer can be at least 4.5, or when R is higher than or equal to 1, the abrasion resistance of the NIR absorbing layer can be at least 6.

The dry content of the metal oxide nanoparticles relative to the sum of the dry content of metal oxide nanoparticles and of the dry content of sol-gel precursor can be higher than or equal to 20 wt %, in particular higher than or equal to 40 wt %, more particularly higher than or equal to 70 wt %.

The dry content of sol-gel precursor relative to the sum of the dry content of metal oxide nanoparticles and of the dry content of sol-gel precursor can be higher than or equal to 30 wt %, in particular higher than or equal to 60 wt %, more particularly higher than or equal to 80 wt%.

The sum of the dry content of metal oxide nanoparticles and of the dry content of sol-gel precursor relative to dry weight of the sol-gel composition is preferably higher than or equal to 80 wt %, in particular higher than or equal to 85 wt %, in particular higher than or equal to 90 wt%, in particular higher than or equal to 95 wt%.

The sol-gel precursor is one mineral alkoxide precursor, in particular an alkoxide of formula M(OR)n wherein M denotes silicon or a metal such as Al or Ti; n denotes the valence of the element M; and the n groups -OR are identical or different organic groups, for example alkoxy groups.

In one embodiment, the sol-gel precursor is a silicium alkoxide.

In one particular embodiment, the sol-gel precursor is a silicium alkoxide chosen from tetramethoxysilane, tetraethoxysilane, tetrapropoxysilane, tetrabutoxysilane, methyltrimethoxysilane, methyltriethoxysilane, methyltripropoxysilane, methyltributoxysilane, dimethyldimethoxysilane, dimethyldiethoxysilane, dimethylpropoxysilane, dimethyldibutoxysilane, trimethylmethoxysilane, trimethylethoxysilane, trimethylpropoxysilane, trimethylbutoxysilane, ethyltrimethoxysilane, methyltriethoxysilane, ethyltripropoxysilane, ethyltributoxysilane, diethyldimethoxysilane, diethyldiethoxysilane, diethylpropoxysilane, diethyldibutoxysilane, triethylmethoxysilane, triethylethoxysilane, triethylpropoxysilane, triethylbutoxysilane, (3-glycidyloxypropyl)trimethoxysilane, (dibutyloxyaluminooxy)triethoxysilane, 3-aminopropyltriethoxysilane, 3-isocyanatopropyltriethoxysilane, 3-mercaptopropyltriethoxysilane, aminophenyltriethoxysilane, (mercaptomethyl)methyldiethoxysilane, tridecafluoro 1,1,2,2-tetrahydrooctyl triethoxysilane, chloropropyltriethoxysilane, amyltriethoxysilane, vinyltriethoxysilane, phenyltriethoxysilane, or a mixture thereof.

The sol-gel composition may further comprise other ingredients such as a catalyst in order to accelerate the hydrolysis reaction and/or the condensation reaction of the sol-gel process.

As such, the catalyst may be hydrolysis catalyst or a condensation catalyst.

As used herein, a hydrolysis catalyst is a catalyst which is able to promote the hydrolysis reaction instead of the condensation reaction. A hydrolysis catalyst may be for instance an acid, in particular chosen from hydrochloride acid, sulfuric acid, phosphoric acid.

As used herein, a condensation catalyst is a catalyst which is able to promote the condensation reaction instead of the hydrolysis reaction. A condensation catalyst may be for instance a metal complex, in particular chosen from aluminum acetylacetonate, itaconic acid and dicyandiamide.

The sol-gel composition may further comprise a surfactant, such as a silicone, in particular a polyether-modified polydimethylsiloxane (such as BYK® surfactants marketed by, in particular BYK -302, BYK-307, BYK-333 or BYK-342) or a fluorinated compound (such as UNIDYNE® surfactants marketed by DAIKIN, in particular NS-9013).

A second object of the invention is a method for preparing the sol-gel composition as defined previously, said method comprising the steps of:
- A1) hydrolyzing the sol-gel precursor thereby forming a hydrolyzed sol-gel precursor,
- B1) dispersing the metal oxide nanoparticles within the hydrolyzed sol-gel precursor,
- C1) condensing the hydrolyzed sol-gel precursor.

Step A1) may be performed by adding water, preferably distilled water or a solution of water and alcohol to the sol-gel precursor, in an amount sufficient to perform hydrolysis of the precursor. A the end of Step A1), a gel is obtained.

In order to accelerate the reaction, step A1) may be performed in the presence of a hydrolysis catalyst as defined previously.

In one embodiment, hydrolysis is performed by adding an aqueous acid solution to the sol-gel precursor.

When the aqueous acid solution is added to sol-gel precursor, the mixture turns cloudy and the temperature increases gradually as the reaction is happening. When the reaction is finished, the mixture turns clear and the temperature of the mixture returns to the temperature before the addition of the aqueous acid solution.

The reaction temperature is preferably controlled to be not more than 40°C. To maintain reaction temperature below 40°C, the addition rate of aqueous acid solution is preferably about 50 ml/min (drop by drop). Once the temperature returns to 25 ± 2 °C, the hydrolysis process may be continued for at least 15 hours (shorter duration for smaller batch) to ensure that the hydrolysis reaction is completed.

According to step B1), the metal oxide nanoparticles are then dispersed within the hydrolyzed sol-gel precursor.

The metal oxide nanoparticles may be commercially available in the form of a colloid, i.e. particles dispersed in solvent such as water or an alcohol, or in the form of a powder.

The metal oxide nanoparticles are added to the hydrolyzed sol-gel precursor and then the mixture is stirred so has to obtain a homogeneous mixture.

If the viscosity of the colloid of metal oxide nanoparticles is high (e.g. > 100 cps), the colloid may be subjected to ultra-sonication before its addition to the hydrolyzed sol-gel precursor in order to reduce its viscosity and obtain a better dispersion and a better homogeneity.

According to step C1), the hydrolyzed sol-gel precursor is then condensed.

The condensation reaction may start before hydrolysis of the sol-gel precursor is completed or after hydrolysis is completed.

The condensation reaction may start spontaneously or by addition of a condensation catalyst as defined previously.

In one embodiment, the condensation reaction is performed by adding a metal complex, such as aluminium acetylacetonate, to the hydrolyzed sol-gel precursor.

During condensation, a surfactant may be added to the hydrolyzed sol-gel precursor in order to improve the cosmetic appearance of the NIR absorbing layer coated optical article of the invention, in particular to reduce visual haze and distortion lines.

The surfactant may be a silicone, in particular a polyether-modified polydimethylsiloxane or a fluorinated compound, as mentioned previously.

A third object of the invention is a method for preparing the optical article of the invention, said method comprising the steps of:
A2) preparing the sol-gel composition as defined previously,
B2) depositing the sol-gel composition onto at least one surface of said transparent substrate,
C2) curing the sol-gel composition.

The step B2) of depositing the sol-gel onto at least one surface of the substrate may be performed using any traditional method, such as for example immersion deposition, spray deposition or spin coating, preferably by immersion deposition.

The step C2) of curing the sol-gel composition consists in removing the solvent and/or water from the gel network to allow its densification and solidification. The curing is preferably performed under atmospheric conditions by heating at a temperature ≦120° C, preferably ≦ 110°C, and even more preferably ≦100°C.

In one embodiment, the curing step C2) is performed in two steps: a pre-cure step at a temperature T₁ during few minutes (e.g. from 10 to 20 minutes), then a post-cure step at the temperature T₂ higher than T₁ during few hours.

After pre-cure, the thickness of the layer of deposited sol-gel may range from 3.5 µm to 5.5 µm, in particular from 4.0 µm to 5.0 µm.

After post-cure, the thickness of the layer of deposited sol-gel may range from 3.0 µm to 5.0 µm, in particular from 3.5 µm to 4.5 µm.

The thickness of the layer deposited on the substrate is adjusted according to the desired NIR absorbance. The thickness of layer is controlled by the coating process, dip or spin speed.

The following examples do illustrate the present invention without limitation.

### EXAMPLES

### 1) NIR absorbing layer formulation

Table 1 shows the composition of a commercial antimony doped tin oxide (ATO) colloid marketed under the name Elcom V-3560, from JGC.

**Table 1**

| **Ingredients** | | **Wt%** |
|---|---|---|
| Tin Dioxide | Metal oxide nanoparticles | 10-20 |
| Antimony Pentoxide | | 3.1 |
| Silicon dioxide | | 0.5-2 |
| Ethanol | Solvents | 65-75 |
| Isopropanol | | 5-10 |
| Methanol | | <5 |

Table 2 shows the composition of a sol-gel formulation used to prepare the NIR absorbing layer according to the invention:

**Table 2**

| **Ingredients** | | **Wt%** |
|---|---|---|
| Glymo® | Sol-gel precursor | 18.45 |
| 0.1N HCl | Hydrolysis catalyst | 4.21 |
| ATO colloid of table 1 (viscosity >100 cps) | Metal oxide nanoparticles | 76.00 |
| Al(acac)₃ | Condensation catalyst | 1.20 |
| BYK-302® | Surfactant | 0.24 |

| | | |
|---|---|---|
| Glymo® is a (3-Glycidyloxypropyl)trimethoxysilane (≥ 98%) marketed by Sigma-Aldrich. BYK-302® is a silicone surfactant marketed by BYK. | | |

The sol-gel formulation of Table 2 was prepared as follows:
- Glymo® as precursor was mixed with 0.1 N HCl and the mixture was stirred for at least 15 hours (10 kg batch) so has to obtain a hydrolyzed Glymo®.
- the ATO colloid was subjected to ultrasonication (1hour for more than 4kg of ATO under a cooling system < 20 °C) in order to decrease its viscosity down to 12 cps.
- The ultrasonicated ATO colloid was then added to the hydrolyzed Glymo®. The mixture was stirred for at leats 5 hours so as to obtain homogenous solution.
- BYK-302 was then added and the mixture was stirred for 15 minutes, then Al(acac)₃ was added and the mixture was stirred for 30 to 60 minutes.

The solid content and viscosity of the prepared sol-gel formulation was measured to be ∼ 31% and ∼ 7 cps respectively.

The prepared formulation was deposited by immersion deposition on both sides of substrates with a layer thickness of 4.0 µm to 5.0 µm. The coating was pre-cured at 75 °C for 15 mins to evaporate solvent and post-cured at 100 °C for 3h. The thickness of the cured layer was 4 µm.

Performance tests were performed on the coated substrates:
- Measurement of transmission absorption spectrum according to the standard method ISO 8980-3 (2013);
- Determination of the mean transmission in the NIR range (TNIR) and the transmission in the visible range (TV);
- Measurement of the haze according to the standard method ASTM D 1003-11;
- Assessment of the visual haze;
- Measurement of the abrasion resistance (Bayer abrasion test: ASTM F735-81)
- Measurement of the adhesion according to a crosshatch adhesion test (ISTM 02-010) after Q-sun adhesion, i.e. after having submitted the coated substrates to UV ageing for 2 periods of time of 40 h;
- Measurement of the scratch resistance according to the Manual steel wool method (Standard QNP 02-061).

Figure 1 shows the transmission absorption spectrum of the coated substrate (ORMA©), i.e. the variation of the transmission factor as a function of the wavelength.

The mean transmission in the NIR range (TNIR) is ∼ 24% and the mean transmission in the visible range (TV) is ∼ 70%.

Table 3 shows the results of the performance tests performed on both coated substrates:

**Table 3**

| Substrates | Orma® | PC |
|---|---|---|
| T_{V}% | ∼70 | ∼70 |
| T_{NIR}% | 24.2 | 24.4 |
| Haze | 0.08 | 0.13 |
| Visual Haze | Pass | Pass |
| Thickness (µm) | 3.8 | 3.9 |
| Abrasion resistance | 6 | 5.9 |
| Q-sun adhesion | Pass 80h | Pass 80h |
| Manual Steel Wool | 1 | 3 |

These results show that the cosmetic appearance and mechanical performances of the coated substrates of the invention very good. They could be used as tinted lenses of Class 3 in the NIR range for the manufacture of sun glasses.

### 2) Abrasion resistance tests

Abrasion resistance tests were performed by varying the ratio R of the dry content of metal oxide nanoparticles (ATO colloid of Table 1) over the dry content of sol-gel precursor (Glymo®). The amounts of the other ingredients of table 2 remained the same.

Table 4 shows the results of these tests:

**Table 4**

| ATO colloid of table 1 | Glymo® | R | Abrasion resistance of the cured coating |
|---|---|---|---|
| 43.5 | 56.5 | 0.770 | 4.7 |
| 47.0 | 53.0 | 0.888 | 5.2 |
| 55.0 | 45.0 | 1.220 | 6.1 |

These results show that, unexpectedly, the coating has a very high abrasion resistance while it shows very good optical properties.

## Claims

1. An optical article comprising a transparent substrate having at least one surface coated with a near infra-red absorbing layer obtained by depositing a sol-gel composition on said surface and then curing said sol-gel composition,
said sol-gel composition being prepared by hydrolyzing and condensing a sol-gel precursor,
said sol-gel composition comprising metal oxide nanoparticles dispersed therein, wherein the amount of metal oxide nanoparticles dispersed in said sol-gel composition is such that the ratio R = (dry content of metal oxide nanoparticles) / (dry content of sol-gel precursor) is higher than or equal to 0.2.

2. The optical article according to claim 1, wherein the ratio R is higher than or equal to 0.5, in particular higher than or equal to 1.0, in particular higher than or equal to 1.5, in particular higher than or equal to 2.3.

3. The optical article according to claim 1 or claim 2, wherein the dry content of metal oxide nanoparticles relative to the sum of the dry content of metal oxide nanoparticles and of the dry content of sol-gel precursor is higher than or equal to 20 wt %, in particular is higher than or equal to 40 wt %, is higher than or equal to 70 wt %.

4. The optical article according to any one of claims 1 to 3, wherein the dry content of sol-gel precursor relative to the sum of the dry content of metal oxide nanoparticles and of the dry content of sol-gel precursor is higher than or equal to 30 wt %, in particular is higher than or equal to 60 wt %, is higher than or equal to 80 wt%.

5. The optical article according to any one of claims 1 to 4, wherein the sol-gel precursor is a silicium alkoxide.

6. The optical article according to any one of claims 1 to 5, wherein the sol-gel precursor is a silicium alkoxide chosen from tetramethoxysilane, tetraethoxysilane, tetrapropoxysilane, tetrabutoxysilane, methyltrimethoxysilane, methyltriethoxysilane, methyltripropoxysilane, methyltributoxysilane, dimethyldimethoxysilane, dimethyldiethoxysilane, dimethylpropoxysilane, dimethyldibutoxysilane, trimethylmethoxysilane, trimethylethoxysilane, trimethylpropoxysilane, trimethylbutoxysilane, ethyltrimethoxysilane, methyltriethoxysilane, ethyltripropoxysilane, ethyltributoxysilane, diethyldimethoxysilane, diethyldiethoxysilane, diethylpropoxysilane, diethyldibutoxysilane, triethylmethoxysilane, triethylethoxysilane, triethylpropoxysilane, triethylbutoxysilane, (3-glycidyloxypropyl)trimethoxysilane, (dibutyl-oxyaluminooxy)triéthoxysilane, 3-aminopropyltriethoxysilane, 3-isocyanatopropyltriethoxysilane, 3-mercaptopropyltriethoxysilane, aminophenyltriethoxysilane, (mercaptomethyl)methyldiethoxysilane, tridecafluoro 1,1,2,2-tetrahydrooctyl triethoxysilane, chloropropyltriethoxysilane, amyltriethoxysilane, vinyltriethoxysilane, phenyltriethoxysilane, or a mixture thereof.

7. The optical article according to any one of claims 1 to 6, wherein the metal oxide nanoparticles are chosen from tin dioxide, indium tin oxide, antimony pentoxide, silicon dioxide, antimony-doped tin oxide, indium-doped tin oxide, phosphorus-doped tin oxide, gallium-doped zinc oxide, titanium dioxide, aluminum oxide or zinc oxide.

8. The optical article according to any one of claims 1 to 7, wherein the sol-gel composition further comprises a hydrolysis catalyst and/or a condensation catalyst.

9. The optical article according to any one of claims 1 to 8, wherein the hydrolysis catalyst is an acid, in particular chosen from hydrochloride acid, sulfuric acid, phosphoric acid.

10. The optical article according to any one of claims 1 to 9, wherein the condensation catalyst is a metal complex, in particular chosen from aluminum acetylacetonate, itaconic acid and dicyandiamide.

11. The optical article according to any one of claims 1 to 10, wherein the sol-gel composition further comprises a surfactant, such as a silicone, in particular a polyether-modified polydimethylsiloxane or a fluorinated compound.

12. The optical article according to any one of claims 1 to 11, wherein said optical article is an ophthalmic lens, in particular a sun lens.

13. A method for preparing the sol-gel composition as defined in any one of claims 1 to 12, said method comprising the steps of:
- A1) hydrolyzing the sol-gel precursor thereby forming a hydrolyzed sol-gel precursor,
- B1) dispersing a colloid of metal oxide nanoparticles within the hydrolyzed sol-gel precursor,
- C1) condensing the hydrolyzed sol-gel precursor.

14. The method according to claim 13, wherein the viscosity of the colloid of metal oxide nanoparticles is reduced before its addition to the hydrolyzed sol-gel precursor.

15. A method for preparing an optical article according to any one of claims 1 to 12, said method comprising the steps of:
A2) preparing the sol-gel composition according to the method according to any one of claims 13 to 14,
B2) depositing the sol-gel composition onto at least one surface of said transparent substrate,
C2) curing the sol-gel composition.
